# EUROPEAN PATENT SPECIFICATION

(11) **EP 1 607 290 B1**
(45) Date of publication and mention of the grant of the patent: **29.10.2008**
(21) Application number: 05105202.5
(22) Date of filing: 14.06.2005
(51) Int. Cl.: B60R 25/02, F16D 1/08, F16B 43/00

(54) **Cylindrical body**
Zylindrischer Körper
Corps cylindrique

(30) Priority: 14.06.2004 JP 2004175747
(43) Date of publication of application: 21.12.2005
(73) Proprietor: JTEKT Corporation, Osaka-shi Osaka 542-8502 (JP)
(72) Inventor: Yamamoto, Yoshitaka KOYO SEIKO CO., LTD., Osaka-shi, Osaka 542-0081 (JP)
(74) Representative: de Beaumont, Michel

(56) References cited:
- EP-A- 0 373 239
- DE-A1- 2 361 218
- DE-A1- 3 435 084
- DE-U- 1 855 948
- FR-A- 1 337 146
- US-A- 3 838 928

## Description

### BACKGROUND OF THE INVENTION

### 1. Field of the Invention

The present invention relates to a steering shaft comprising a cylindrical body for generating slip torque between two members.

### 2. Description of Related Art

A cylindrical body (slip ring) for generating slip torque is used in a shock absorbing mechanism for a steering shaft (for example, Japanese Patent No. 3174266 (equivalent to US-A-5 664 806)), a disc drive storage device (for example, Japanese Published Patent Publication No. 2003-518592) or the like. Document DE-A-3435084 shows a prior art steering column.

The slip ring includes a slit provided in an axial direction and convexities provided in parallel with the axial direction at plural circumferential positions.

The slip ring configured as described above is placed between two members which are engaged with each other so as to allow their relative rotation, and the inner circumferential surface of the slip ring contacts with the outer peripheral surface of one of the members. The top surfaces of the convexities contact with the inner circumferential surface of the other member, and these convexities are pressed to cause plastic deformation thereof. Thus, the reaction force of the convexities caused by pressing the convexities generates slip torque.

The reaction force of the convexities caused by pressing the convexities is generated at the both longitudinal ends of the top surfaces thereof. However, the slip ring configured as in Japanese Patent No. 3174266 and Japanese Published Patent Publication No. 2003-518592 includes convexities having top surfaces with substantially a constant width between the both ends, and a single convexity generates reaction force only at two positions when being pressed.

Consequently, in the case where the slip ring is used at a place which requires relatively large slip torque such as the vehicle anti-theft key lock units mounted to a vehicle steering apparatus, sufficient slip torque can not be generated and there has been a need for solutions. As means for increasing the slip torque, there has been known a slip ring including a plurality of convexities juxtaposed at the both axial sides, as described in, for example, PCT International Publication No. WO 94/29609. However, the slip ring disclosed in PCT International Publication No. WO 94/29609 has a problem that the overall length of the cylindrical body must be increased to about twice, thus increasing the size of the entire cylindrical body.

### BRIEF SUMMARY OF THE INVENTION

The present invention has been made with the aim of solving the above problem, and it is an object of the present invention to provide a steering shaft comprising a cylindrical body which is capable of generating relatively large slip torque and enables reducing the size thereof as claimed in claim 1..

The above and further objects and features of the invention will more fully be apparent from the following detailed description with accompanying drawings.

### BRIEF DESCRIPTION OF THE SEVERAL VIEWS OF THE DRAWINGS

FIG. 1 is a perspective view illustrating the configuration of a cylindrical body used in the present invention;
FIG. 2 is an enlarged perspective view illustrating the configuration of main parts of the cylindrical body used in the present invention;
FIG. 3 is a cross sectional view along line III-III in FIG. 2;
FIG. 4 is a cross sectional view along line IV-IV in FIG. 2;
FIG. 5 is a cross sectional view along line V-V in FIG. 2;
FIG. 6 is a partially sectional plan view illustrating the configuration of a steering apparatus utilizing the cylindrical body according to the present invention; and
FIG. 7 is an enlarged cross sectional view of a key lock unit of the steering apparatus utilizing the cylindrical body according to the present invention.

### DETAILED DESCRIPTION OF THE INVENTION

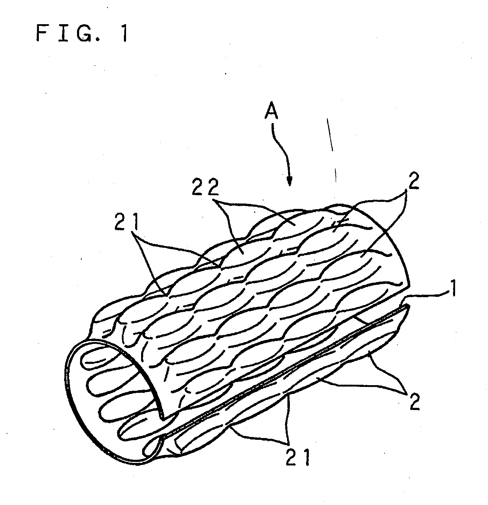

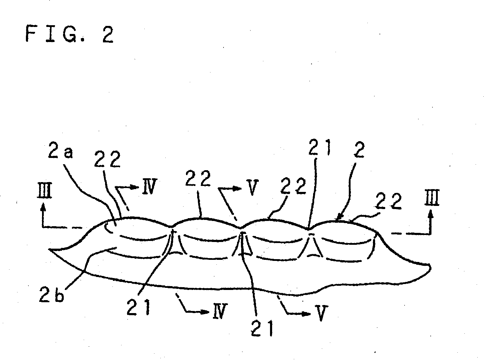

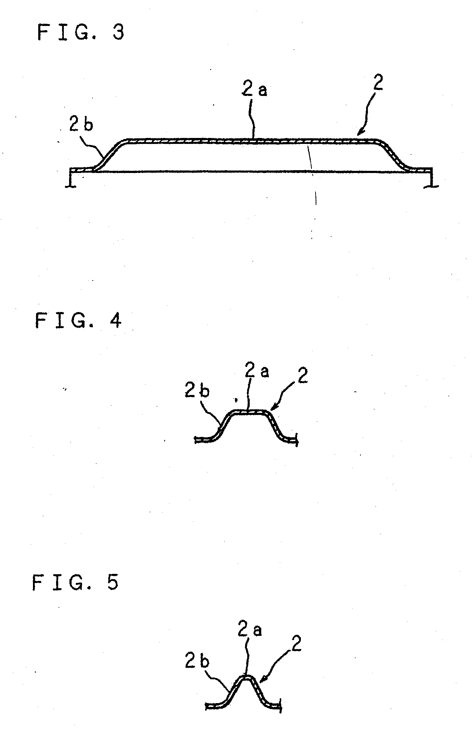

Hereinafter, the present invention will be described on the basis of the drawings illustrating embodiments thereof. FIG. 1 is a perspective view illustrating the configuration of a cylindrical body used in the present invention. FIG. 2 is an enlarged perspective view illustrating the configuration of main parts of the cylindrical body. FIG. 3 is a cross sectional view along line III-III in FIG. 2. FIG. 4 is a cross sectional view along line IV-IV in FIG. 2. FIG. 5 is a cross sectional view along line V-V in FIG. 2.

A cylindrical body A includes a slit 1 provided in an axial direction, and convexities 2 provided at plural circumferential positions in parallel with the axial direction. The cylindrical body A is formed by bending, into substantially a cylindrical shape, a relatively-thin metal plate, such as a spring steel plate, which has the plural convexities 2 formed in parallel with one another, and the slit 1 is provided therein at a single circumferential position. Further, the convexities 2 are provided from the vicinity of one axial end to the vicinity of the other axial end.

The convexities 2 include top surfaces 2a and circumferential surfaces 2b (side surfaces) continuous with the circumferential edge of the top surface 2a, and the convexities 2 are provided with narrow portions 21 having a width dimension smaller than the width dimension of the convexities 2, at plural positions between both the longitudinal ends of the convexities 2. Further, the narrow portions 21 are constituted by recessed portions provided at parts of the both side surfaces of the convexities 2. The circumferential surfaces of the narrow portions 21 and the non-narrow portions 22 are curved in substantially a waveform.

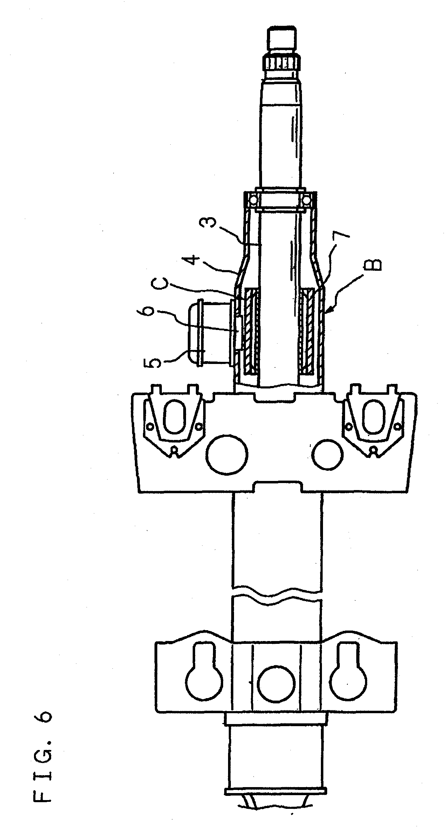

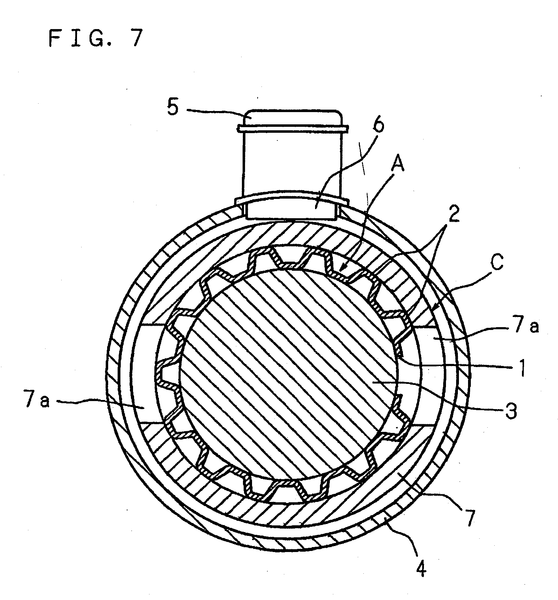

The cylindrical body A configured as described above is used, in a key lock unit C of a vehicle steering apparatus B. FIG. 6 is a partially sectional plan view illustrating the configuration of a steering apparatus utilizing the cylindrical body, and FIG. 7 is an enlarged cross sectional view of the key lock unit.

The steering apparatus B includes a steering shaft 3 which is coupled at its upper portion to a steering wheel for steering and also is coupled and engaged at its lower portion with a steering mechanism through transmitting means such as a universal joint, a housing 4 which houses and supports the steering shaft 3 rotatably, and a vehicle anti-theft key lock unit C mounted to the housing 4 and the steering shaft 3.

The key lock unit C includes a cylinder 5 mounted to the upper side of the housing 4, a lock pin 6 which is rotatably held within the cylinder 5 and is moved in the radial direction of the housing 4 in conjunction with the rotation of a rotation operating member (not shown) including a key hole for an engine key, a locking cylinder 7 which is loosely fitted around the steering shaft 3 and has a locking hole 7a for locking the end of the lock pin 6, and the cylindrical body A disposed between the locking cylinder 7 and the steering shaft 3, wherein the cylindrical body A secures the locking cylinder 7 around the steering shaft 3 and thus the cylindrical body A generates slip torque. By inserting the engine key into the key hole in the rotation operating member and operating the engine key to rotate the rotation operating member and move the lock pin 6 in the radial direction of the housing 4, the end of the lock pin 6 is locked in the locking hole 7a provided in the locking cylinder 7 and the rotation of the steering shaft 3 is locked.

The cylindrical body A disposed between the locking cylinder 7 and the steering shaft 3 contacts at its inner circumferential surface with the outer peripheral surface of the steering shaft 3. The top surfaces 2a of the convexities 2 contact with the inner circumferential surface of the locking cylinder 7, and the convexities 2 are pressed to cause plastic deformation thereof. The reaction force of the convexities 2 caused by pressing the convexities 2 generates slip torque. These convexities 2 are provided with narrow portions 21 at plural positions between both the longitudinal ends, and a single convexity 2 generates reactive force at both the longitudinal ends and the plural narrow portions 21. Consequently, relatively large slip torque can be generated and furthermore the axial length of the cylindrical body A can be made relatively small, thus enabling reduction of the size thereof. Accordingly, it is possible to reduce the size of apparatuses such as the steering apparatus B including the key lock unit C utilizing the cylindrical body A. Further, it is possible to utilize the cylindrical body A between two small members for which existing cylindrical bodies (slip rings) can not be utilized. Thus, the area of utilization can be increased.

Also, in the above embodiment, it is possible to provide a single, two or more than three narrow portions 21, between the both longitudinal ends of the convexities 2, instead of three narrow portions 21 shown in FIGS. 1 and 2. The number of the narrow portions is not particularly limited.

## Claims

1. A steering shaft (3) with a key lock device comprising a lock pin (6) which is held within a cylinder (5) so as to move in the axial direction of the cylinder (5) and a locking cylinder (7) which is loosely fitted around the steering shaft (3) and has a locking hole (7a) for locking the end of said lock pin (6), further comprising a cylindrical body disposed between the steering shaft (3) and the locking cylinder (7) so as to allow their relative rotation, and comprising a slit (1) provided in an axial direction and convexities (2) provided in the axial direction at plural circumferential positions, wherein said convexities (2) have narrow portions (21) provided at plural positions between both the longitudinal ends of said convexities (2) which include recessed portions provided at parts of the both side surfaces thereof, as said narrow portions (21).

2. The steering shaft according to claim 1, wherein said narrow portions (21) have a width dimension smaller than the width dimension of said convexities (2).

3. The steering shaft according to claim 1, wherein said convexities (2) have top surfaces (2a) and circumferential surfaces (2b) continuous with the edges of the top surfaces (2a).

## Patentansprüche

1. Lenkwelle (3) mit einer Schlüsselverriegelungsvorrichtung, die einen Verriegelungsstift (6) aufweist, der innerhalb eines Zylinders (5) gehalten wird, um sich in Axialrichtung des Zylinders (5) zu bewegen und einen Schließzylinder (7), der lose um die Lenkwelle (3) herum gepasst ist, und ein Verriegelungsloch (7a) aufweist zum Verriegeln des Endes des Verriegelungsstiftes (6), die ferner einen zylindrischen Körper aufweist, der zwischen der Lenkwelle (3) und dem Schließzylinder (7) angeordnet ist, um ihre Relativdrehung zu erlauben, und die einen Schlitz (1) aufweist, der in einer Axialrichtung vorgesehen ist, und konvexe Bereiche bzw. Ausbuchtungen (2), die in der Axialrichtung an einer Vielzahl von Umfangspositionen vorgesehen sind, wobei die konvexen Bereiche (2) schmale Teile (21) an mehreren Positionen zwischen beiden Längsenden der konvexen Bereiche (2) besitzen, welche zurückgesetzte Teile umfassen, die an Teilen von beiden Seitenoberflächen davon als die schmalen Teile (21) vorgesehen sind.

2. Lenkwelle nach Anspruch 1, wobei die schmalen Teile (21) eine Breitenmessung besitzen, die kleiner ist als die breite Abmessung der konvexen Bereiche (2).

3. Lenkwelle nach Anspruch 1, wobei die konvexen Bereich (2) Oberseiten (2a) und Umfangsflächen (2b) aufweisen, die kontinuierlich mit den Kanten der Oberseiten (2a) sind.

## Revendications

1. Arbre de direction (3) muni d'un dispositif de verrouillage à clé comprenant une broche de verrouillage (6) qui est maintenue dans un cylindre (5) de façon à être mobile dans la direction axiale du cylindre (5) et un cylindre de verrouillage (7) qui est monté avec du jeu autour de l'arbre de direction (3) et comporte un trou de verrouillage (7a) pour verrouiller l'extrémité de la broche de verrouillage (6), comprenant en outre un corps cylindrique placé entre l'arbre de direction (3) et le cylindre de verrouillage (7) de façon à permettre leur rotation relative, et comprenant une fente (1) prévue dans une direction axiale et des parties convexes (2) prévues dans la direction axiale au niveau de plusieurs positions périphériques, dans lequel lesdites parties convexes (2) comportent des parties étroites (21) prévues au niveau de plusieurs positions entre les deux extrémités longitudinales des parties convexes (2) qui comprennent des parties en retrait prévues au niveau de certaines parties de leurs deux surfaces latérales, en tant que lesdites parties étroites (21).

2. Arbre de direction selon la revendication 1, dans lequel les parties étroites (21) ont une largeur inférieure à la largeur des parties convexes (2).

3. Arbre de direction selon la revendication 1, dans lequel les parties convexes (2) ont des surfaces supérieures (2a) et des surfaces périphériques (2b) continues avec les bords des surfaces supérieures (2a).
